## Europäisches Patentamt
## European Patent Office
## Office européen des brevets

(11) Publication number: **0 224 429 B1**

(12) **EUROPEAN PATENT SPECIFICATION**

(45) Date of publication of the patent specification:
28.11.90

(51) Int. Cl.⁵: **F23R 3/18,** F02C 7/264

(21) Application number: **86630174.0**

(22) Date of filing: **20.11.86**

(54) Gas turbine engine augmentor.

(30) Priority: **25.11.85 US 801642**

(43) Date of publication of application:
**03.06.87 Bulletin 87/23**

(45) Publication of the grant of the patent:
**28.11.90 Bulletin 90/48**

(84) Designated Contracting States:
**CH DE FR GB LI**

(56) References cited:
**FR-A- 1 199 822**
**GB-A- 744 178**
**GB-A- 886 700**
**GB-A- 2 024 403**
**US-A- 4 423 595**

(73) Proprietor: **UNITED TECHNOLOGIES CORPORATION,
United Technologies Building 1, Financial Plaza,
Hartford, CT 06101(US)**

(72) Inventor: **Clements, Thomas Rush, 5152 Southwest
Ranchito Drive, P.O. Box 455, Palm
City,Florida 33450(US)**
Inventor: **Blevins, James Dale, 571 Riverside Drive, Palm
Beach Gardens Florida 33410(US)**

(74) Representative: **Weydert, Robert et al, OFFICE
DENNEMEYER S.à.r.l. P.O. Box 1502,
L-1015 Luxembourg(LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to gas turbine power plants with augmentors and more particularly to means for improving the ignition and stabilization characteristics of the augmentor.

As is well known, the augmentor comprises a well known flameholder consisting of a pilot section centrally supported in the housing of the augmentor and carries a plurality of radially extending gutters. A plurality of sprayrings upstream of the flameholder serves to judiciously inject fuel in the engine's exhaust to be entrained in and ignited in the aerodynamic wake of the flameholder. The pilot section is designed to provide a recirculation zone to stabilize the burning characteristics of the fuel so as to sustain combustion and to propagate the combustion around the perimeter of the flameholder.

The augmentor should be actuated at any time within the flight envelope for the aircraft's mission. It has been known that under certain aircraft operating conditions ignition and/or sustained operation has not been successful.

The typical pilot section of the augmentor is either domed or "V" shaped and the apex faces the fuel being injected by the sprayring. After the fuel entrained air flows past the aft station of the pilot section, a portion of the fuel/air mixture migrates rearwardly relative to the flow of the engine's exhaust and recirculates inside the pilot section. The fuel entrained air is brought in close proximity to the igniter mounted in the pilot section. Unless the fuel/air mixture is within the proper proportions combustion will not ensue. It has been found that the mixture in the heretofore known designs has often been either too lean or too rich for ignition to ensue. A flameholder of the type according to the precharacterizing portion of independent claim 1 is disclosed in FR-A 1 199 822. A plurality of apertures are formed in the wall of the flameholder pilot section to admit additional fuel entrained air into the primary wake of the flameholder to thereby improve the stability of the flame which attaches to the flameholder aft end. Improvement of the ignition characteristics is not contemplated in FR-A 1 199 822.

The object of the invention is to provide a flameholder having improved ignition and stability characteristics of the pilot section in the augmentor of a gas turbine engine. This is achieved by the features recited in the characterizing portion of independent claim 1.

We have found that we can obviate the fuel/air mixture problem in the pilot section by lecating an opening or slot for discretely flowing the fuel entrained air into the pilot section at a predetermined location and orientation relative to the igniter. In particular, in the dome-shaped (in cross section) pilot section the opening is located downstream of the leading edge of the flameholder but in proximity thereto. The opening is oriented so that its plane is in coincidence with the walls of the opening and is perpendicular to the engine centerline such that the flow admitted into the pilot section is tangential to the inner wall of the apex of the dome and spaced from the igniter so that the fuel/air mixture passes in proximity thereto. Tests have shown that a pilot section incorporating this invention forms a small recirculating zone adjacent the igniter, has proven to provide efficacious ignition characteristics and can accommodate operation over a much broader range of fuel-air mixture ratios at all operating conditions.

An additional advantageous feature is to further improve the overall stability characteristics by creating the circulating vortices described in the paragraphs above around the full circumference of the pilot section. This can be achieved by locating openings as described above around the circumference of the pilot section in a plane perpendicular to the centerline of the pilot section. The openings are oriented such that the flow into the pilot section is introduced tangentially to the inside surface of the leading edge.

In certain heterofore known systems the augmentor incorporated a shroud surrounding the pilot section designed to profile the flow to achieve an improved aerodynamic recirculation zone. The shroud provided a flow path adjacent to the outer surface of the pilot section and directed the fuel entrained air in proximity to the aft end of the pilot section. Augmentors incorporating this design did not achieve the desired stability characteristics for all operating conditions.

Other features and advantages of the flameholder will be apparent from the specification and claims and from the accompanying drawings, wherein:

Figure 1 is a elevated view of the flameholder of an augmentor for a gas turbine engine.

Figure 2 is a sectional view taken along lines 2–2 of Figure 1 and showing a typical fuel sprayring.

Figure 3 is an enlarged partial plan view of the flameholder.

Figure 4 is a graphical illustration showing the documented improvement in ignition capability.

Figure 5 is a graphical illustration showing the results of tests in improving the stability envelope with a typical pilot section in actual use.

Figure 6 is a partial view of the flameholder showing holes instead of slots as another embodiment of this flameholder.

While the invention in its preferred embodiment is described in connection with a U-shaped or domed pilot section, and as would be understood by one skilled in the art, this invention has utility for other configured augmentors. For the sake of convenience and simplicity only that portion of the augmentor that relates to the invention will be described.

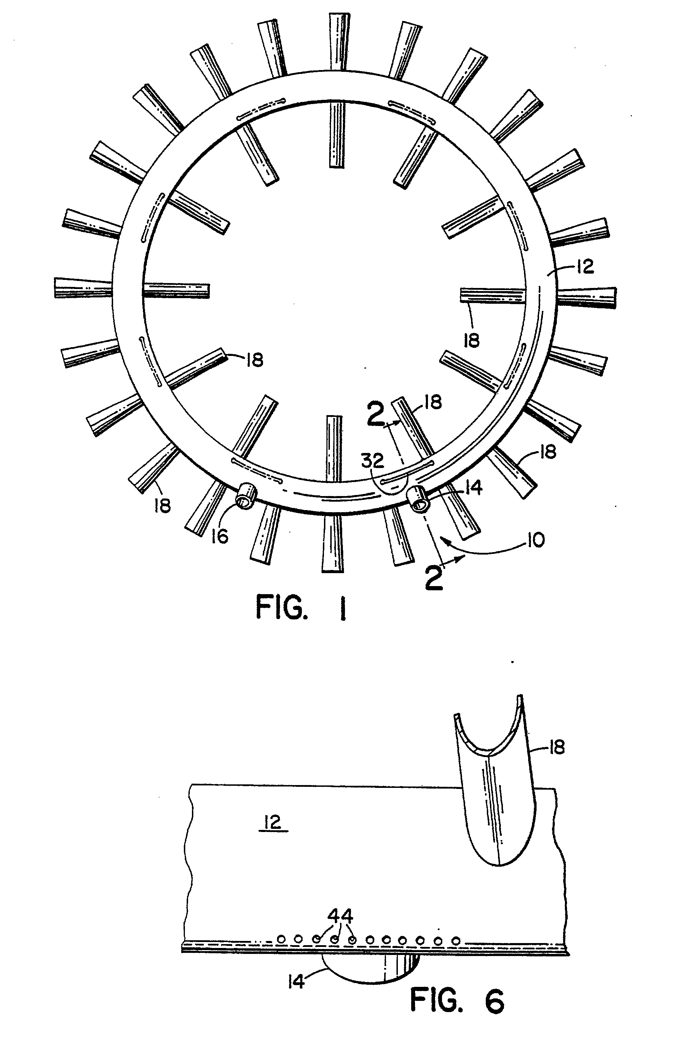

As noted in Figs. 1 to 3, the augmentor consists of a flameholder assembly generally indicated by reference numeral 10 having a pilot section 12, igniter ports 14 and 16 and a plurality of radial gutters 18 extending radially inwardly and outwardly and circumferentially spaced around the pilot section 12.

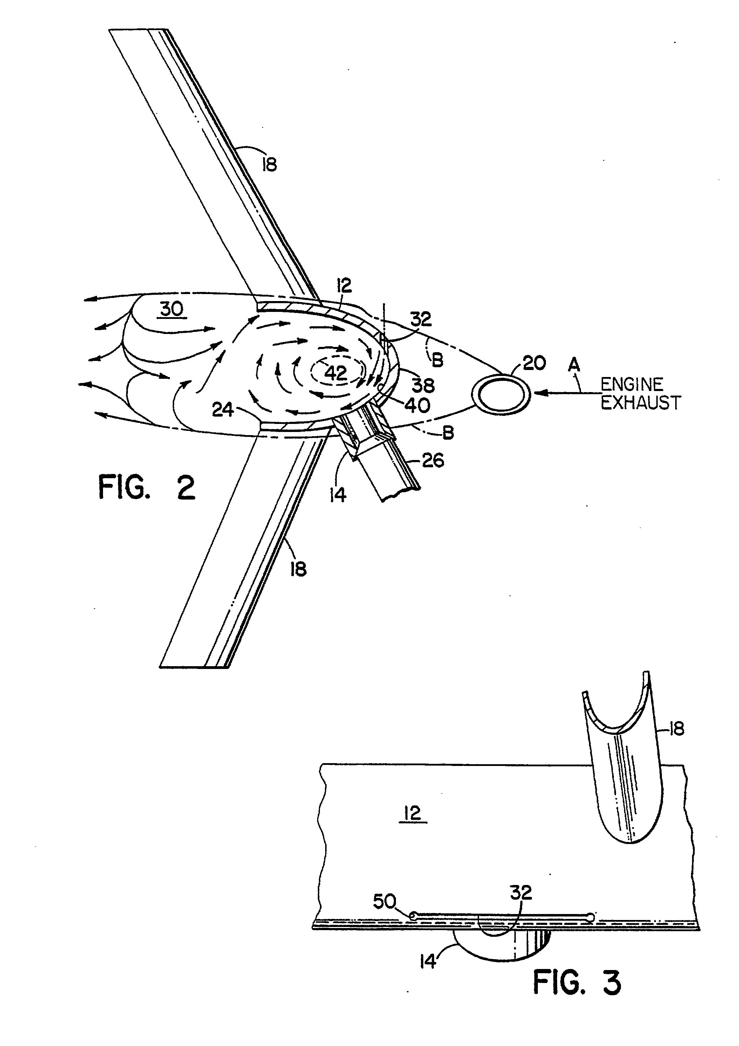

As best seen in Fig. 2, a suitable spray ring 20 injects fuel into the engine exhaust stream indicated by arrow A whereupon the exhaust entrained fuel is directed toward the pilot section 12 as shown by the stream lines indicated by arrow B. As the exhaust entrained fuel passes the aft station 24 of the pilot section 12 the pressure pattern will cause the flow to migrate toward the igniter 26 supported in the igniter ports 16 and 14. The resulting fuel/air mixture flows over the pilot section 12 and is entrained in the aerodynamic recirculation zone 30. The recirculation brings a portion of the fuel/air mixture into close proximity of the igniter 26 and is ignited when the igniter sparks. In some situations the fuel/air mixture reaching the igniter is too lean to be ignited.

An aperture critically located and oriented in the pilot section 12 serves to improve the ignition and stability characteristics of the augmentor 10. In one embodiment as best seen in Figs. 2 and 3 a slot 32 is formed in the wall of the pilot section extending transverse to the direction of the air flow in proximity to the leading edge 38 of the pilot section 12 so that the fore edge of slot is substantially in line with the inner surface 40 of the pilot section 12 on the back wall of leading edge 38. The slot is machined perpendicular to the engine centerline (parallel with the centerline of pilot section 12) so that it breaks through the inside surface of the pilot section 12 as nearly tangential to the surface 40 as possible.

In this configuration, exhaust entrained fuel is admitted through slot 32 whereupon a swirl is imparted thereto to form a vortical recirculating zone 42 in proximity to igniter 26. This enriches the fuel/air mixture and as is apparent no other complicated apparatus is necessary, as for example, a specialized spray bar configuration.

Another embodiment to the flameholder is exemplified in Fig. 6 which shows a plurality of drilled holes 44 extending laterally relative to the exhaust flow. Likewise each hole is drilled perpendicular to the engine centerline and in proximity to the inside wall 40 of leading edge 38. In either configuration the critical location and orientation is designed to produce a vortical recirculation zone adjacent the igniter.

When utilizing the slot configuration as shown in Figs. 1 to 3, it is preferred to incorporate some means for preventing the initiation of cracks. As suitable means would be by putting a sufficient radius 50 at the ends of the slot or "stop drilled".

As is exemplified in Fig. 1, a plurality of slots 32 (or drilled holes 44) may be located around the circumference of the pilot section 12 to enhance combustion stability. The ingestion of fuel/rich gas through these slots 32 or holes 44 so as to provide a plurality of the vortices (zone 42) would improve stability. The number of slots and the spacings would depend on the particular application for each augmentor.

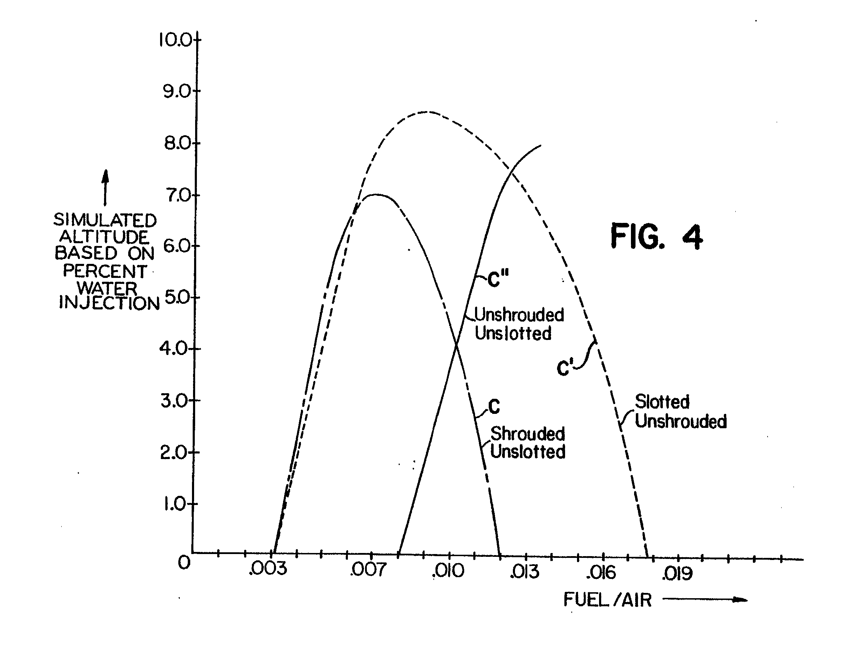

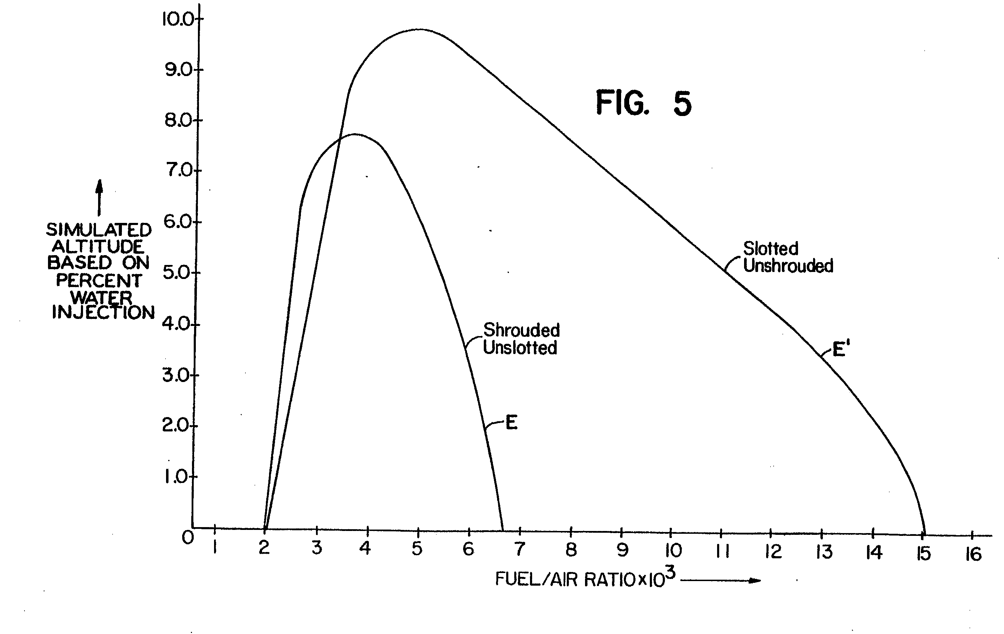

Actual tests of the present flameholder in comparison with a shrouded pilot utilized in heretofore known augmentors have shown that the flameholder with the invention operates over a wider range of fuel/air ratios and altitude than a flameholder without the invention. These comparisons are illustrated in Fig. 4 comparing the ignition characteristics and Fig. 5 comparing the stability envelope characteristics.

In Fig. 4 the curve represented by the dash line C shows the range of where ignition will ensue over a given fuel air ratio for a given altitude for the shrouded pilot. Line C′ shows the expanded range for ignition when the invention is employed. While the shrouded pilot gives similar results at the low end of the scale, flameholders without the shroud have not evidenced these results as shown by line C″. Hence, the flameholder utilized in the invention produces similar results in the low portion of the lean fuel/air ratio without the encumbering hardware represented by the shroud while greatly extending the rich fuel/air and altitude ignition capability.

Figure 5 is actual test data comparing the stability characteristics of the shrouded pilot flameholder and of the flameholder incorporating the invention. Line E illustrates the stability regime of the shrouded pilot flameholder and Line E′ is that for the flameholder incorporating the invention. Stability will be evidenced under all the fuel/air ratio values for a given altitude while the augmentor is operating under the respective curves.

Again, the flameholder incorporating the invention has a much extended range of operation both in terms of acceptable fuel/air ratios and in terms of altitude capability.

**Claims**

1. A flameholder having an annular-shaped pilot section (12) and disposed in an augmentor of a gas turbine engine, said pilot section (12) having a wall defining a cavity, said wall having an aperture (32; 44) therein for admitting fuel entrained exhaust gases into said cavity, a concave-shaped inner surface (40), a closed end portion at the fore end defining a leading edge (38) and an open portion at the aft end (24) and an igniter (26) disposed in said cavity, characterized in that said aperture (32; 44) extends transverse to the direction of the flow of the exhaust gases in said augmentor, is positioned adjacent said leading edge (38), oriented perpendicular to the centerline of the annular-shaped pilot section (12), substantially tangential to said concave-shaped inner surface (40), and located so that the flow of fuel entrained exhaust gases is admitted through said aperture (32, 34) into said cavity in proximity to said igniter (26) to create a vortical flow region adjacent thereto.

2. A flameholder according to claim 1, characterized in that a plurality of radially extending gutters (18) are circumferentially spaced around said pilot section (12), and that said aperture (32; 44) extends between two adjacent gutters (18) of said plurality of gutters (18).

3. A flameholder according to claim 2, characterized in that said aperture is a slot (32).

4. A flameholder according to claim 2, characterized in that said aperture comprises a plurality of drilled holes (44).

5. A flameholder according to claim 1, characterized in that said annular-shaped pilot section (12) is dome-shaped in cross-section, said aperture (32; 44) having a fore wall portion aligning with the inner wall of the apex of said dome of said pilot section (12) adjacent said leading edge (38).

6. A flameholder according to claim 1, characterized in that a plurality of said apertures (32; 44) are circumferentially spaced around said pilot section (12), whereby the stability characteristics of the combustion is enhanced.

7. A flameholder according to claim 2, characterized in that a plurality of apertures (32; 44) are circumferentially spaced around said pilot section (12), each aperture (32; 44) being dimensioned so that its lateral extent is not greater than the spacing between adjacent gutters (18), and each aperture (32; 44) being disposed between adjacent gutters (18), whereby the stability characteristic of said pilot section (12) is enhanced.

## Patentansprüche

1. Flammenhalter, der einen ringförmigen Pilotabschnitt (12) hat und in einem Schubverstärker eines Gasturbinentriebwerks angeordnet ist, wobei der Pilotabschnitt (12) eine Wand hat, die einen Hohlraum begrenzt und mit einer Öffnung (32; 44) versehen ist zum Einlassen von Brennstoff mit sich führenden Abgasen in den Hohlraum, eine konkav geformte innere Oberfläche (40), einen geschlossenen Endteil an dem vorderen Ende, der einen vorderen Rand (38) bildet, und einen offenen Teil an dem hinteren Ende (24) sowie eine Zündvorrichtung (26), die in dem Hohlraum angeordnet ist, dadurch gekennzeichnet, daß sich die Öffnung (32; 44) quer zu der Richtung der Strömung der Abgase in dem Schubverstärker erstreckt, an dem vorderen Rand (38) angeordnet ist, rechtwinkelig zu der Mittellinie des ringförmigen Pilotabschnitts (12) ausgerichtet ist, zu der konkav geformten inneren Oberfläche (40) im wesentlichen tangential ist und so angeordnet ist, daß die Strömung von Brennstoff mit sich führenden Abgasen über die Öffnung (32, 34) in den Hohlraum in der Nähe der Zündvorrichtung (26) eingelassen wird, um nahe derselben ein Drallströmungsgebiet zu erzeugen.

2. Flammenhalter nach Anspruch 1, dadurch gekennzeichnet, daß eine Vielzahl von sich radial erstreckenden Rinnen (18) in gegenseitigem Umfangsabstand um den Pilotabschnitt (12) angeordnet sind und daß sich die Öffnung (32; 44) zwischen zwei benachbarten Rinnen (18) der Vielzahl von Rinnen (18) erstreckt.

3. Flammenhalter nach Anspruch 2, dadurch gekennzeichnet, daß die Öffnung ein Schlitz (32) ist.

4. Flammenhalter nach Anspruch 2, dadurch gekennzeichnet, daß die Öffnung eine Vielzahl von gebohrten Löchern (44) aufweist.

5. Flammenhalter nach Anspruch 1, dadurch gekennzeichnet, daß der ringförmige Pilotabschnitt (12) im Querschnitt kuppelförmig ist, wobei die Öffnung (32; 44) einen vorderen Wandteil hat, der mit der inneren Wand des Scheitels der Kuppel des Pilotabschnitts (12) an dem vorderen Rand (38) ausgerichtet ist.

6. Flammenhalter nach Anspruch 1, dadurch gekennzeichnet, daß eine Vielzahl der Öffnungen (32; 44) in gegenseitigem Umfangsabstand um den Pilotabschnitt (12) vorgesehen sind, wodurch die Stabilitätseigenschaften der Verbrennung verbessert werden.

7. Flammenhalter nach Anspruch 2, dadurch gekennzeichnet, daß eine Vielzahl von Öffnungen (32; 44) in gegenseitigem Umfangsabstand um den Pilotabschnitt (12) angeordnet sind, wobei jede Öffnung (32; 44) so bemessen ist, daß ihre Querausdehnung nicht größer als der Abstand zwischen benachbarten Rinnen (18) ist, und wobei jede Öffnung (32; 44) zwischen benachbarten Rinnen (18) angeordnet ist, wodurch die Stabilitätseigenschaften des Pilotabschnitts (12) verbessert werden.

## Revendications

1. Stabilisateur de flamme comportant une section pilote annulaire (12) et disposé dans un dispositif de postcombustion d'un turbomoteur, cette section pilote (12) ayant une paroi définissant une cavité, cette paroi présentant une ouverture (32; 44) pour admettre dans la cavité du carburant entraîné par les gaz d'échappement, une surface interne (40) de forme concave, une portion extrême fermée à l'extrémité avant, définissant un bord d'attaque (38), et une portion ouverte à l'extrémité arrière (24), et un allumeur (26) disposé dans la cavité, caractérisé en ce que l'ouverture (32; 44) s'étend transversalement par rapport à la direction du flux des gaz d'échappement dans le dispositif de postcombustion, elle est placée à proximité immédiate du bord d'attaque (38), elle est orientée perpendiculairement à l'axe de la section pilote de forme annulaire (12), elle est sensiblement tangente à la surface interne de forme concave (40) et elle est située de telle façon que le flux de carburant entraîné par les gaz d'échappement soit admis à travers l'ouverture (32, 34) vers et dans la cavité, à proximité de l'allumeur (26), afin de créer une région d'écoulement à vortex à proximité immédiate de cet allumeur.

2. Stabilisateur de flamme suivant la revendication 1 caractérisé en ce qu'une pluralité de gouttières (18), s'étendant radialement, sont espacées, dans le sens circonférentiel, tout autour de la section pilote (12), et en ce que l'ouverture (32; 44) s'étend entre deux gouttières adjacentes (18) parmi la pluralité de gouttières (18).

3. Stabilisateur de flamme suivant la revendication 2 caractérisé en ce que l'ouverture est une fente (32).

4. Stabilisateur de flamme suivant la revendication 2 caractérisé en ce que l'ouverture comprend une pluralité de trous percés (44).

5. Stabilisateur de flamme suivant la revendication 1 caractérisé en ce que la section pilote annulaire (12) présente la forme d'un dôme en coupe transversale, l'ouverture (32; 44) ayant une portion de paroi avant alignée avec la paroi interne du sommet du dôme de la section pilote (12) adjacent au bord d'attaque (38).

6. Stabilisateur de flamme suivant la revendication 1 caractérisé en ce qu'une pluralité d'ouvertures (32; 44) sont réparties, dans le sens circonférentiel, tout autour de la section pilote (12) si bien que les caractéristiques de stabilité de la combustion sont améliorées.

7. Stabilisateur de flamme suivant la revendication 2 caractérisé en ce qu'une pluralité d'ouvertures (32; 44) sont espacées, dans le sens circonférentiel, tout autour de la section pilote (12), chaque ouverture (32; 44) étant dimensionnée de manière que son extension latérale ne soit pas plus grande que l'espacement entre des gouttières voisines (18), chaque ouverture (32; 44) étant disposée entre des gouttières voisines (18), si bien que la caractéristique de stabilité de la section pilote (12) est améliorée.

EP 0 224 429 B1

FIG. 1

FIG. 6

FIG. 2

ENGINE
EXHAUST

FIG. 3

FIG. 4

FIG. 5

EP 0 224 429 B1